# EUROPÄISCHE PATENTSCHRIFT

(11) **EP 3 974 783 B1**
(45) Veröffentlichungstag und Bekanntmachung des Hinweises auf die Patenterteilung: **14.02.2024**
(21) Anmeldenummer: 21198869.6
(22) Anmeldetag: 24.09.2021
(51) Int. Cl.: G01F 1/66, G01F 1/667

(54) **ULTRASCHALLWANDLER, VERFAHREN ZUM BETREIBEN EINES ULTRASCHALLWANDLERS, ULTRASCHALLDURCHFLUSSMESSGERÄT UND VERFAHREN ZUM BETREIBEN EINES ULTRASCHALLDURCHFLUSSMESSGERÄTS**
ULTRASONIC TRANSDUCER, METHOD FOR OPERATING AN ULTRASONIC TRANSDUCER, ULTRASONIC FLOW METER AND METHOD FOR OPERATING AN ULTRASONIC FLOW METER
TRANSDUCTEUR À ULTRASONS, PROCÉDÉ DE FONCTIONNEMENT D'UN TRANSDUCTEUR À ULTRASONS, DÉBITMÈTRE À ULTRASONS ET PROCÉDÉ DE FONCTIONNEMENT D'UN DÉBITMÈTRE À ULTRASONS

(30) Priorität: 25.09.2020 DE 102020125163; 25.09.2020 DE 102020125164; 05.11.2020 DE 102020129191; 05.11.2020 DE 102020129196
(43) Veröffentlichungstag der Anmeldung: 30.03.2022
(73) Patentinhaber: Krohne Messtechnik GmbH, 47058 Duisburg (DE)
(72) Erfinder: VOGT, Michael, 44797 Bochum (DE)
(74) Vertreter: Gesthuysen Patentanwälte

(56) Entgegenhaltungen:
- EP-A2- 2 148 322
- WO-A1-2020/083910
- DE-U1- 29 509 574
- US-A- 4 505 160
- US-A1- 2010 313 676

## Beschreibung

Die Erfindung geht aus von einem Ultraschallwandler, insbesondere für ein Ultraschalldurchflussmessgerät, wobei der Ultraschallwandler wenigstens ein elektroakustisches Element, wenigstens ein Gehäuse, wenigstens ein akustisches Fenster und wenigstens eine Steuereinheit aufweist,
wobei das elektroakustische Element innerhalb des Gehäuses derart auf dem akustischen Fenster angeordnet ist, dass im Betrieb ein von dem elektroakustischen Element erzeugtes Ultraschallsignal das Gehäuse durch das akustische Fenster verlässt.

Darüber hinaus betrifft die Erfindung ein Verfahren zum Betreiben eines Ultraschallwandlers in einer Messumgebung, ein Ultraschalldurchflussmessgerät mit wenigstens einem Messrohr, mit wenigstens einem Ultraschallwandler und mit wenigstens einer Steuer- und Auswerteeinheit, wobei der wenigstens eine Ultraschallwandler zumindest als Ultraschallsender, vorzugsweise als Ultraschallsender und -empfänger, ausgebildet ist und wobei der Ultraschallwandler derart an dem Messrohr angeordnet ist, dass er im Betrieb ein Ultraschallsignal in oder entgegen der Strömungsrichtung eines strömenden Mediums in das Messrohr aussendet, sowie ein Verfahren zum Betreiben eines Ultraschalldurchflussmessgeräts.

Aus dem Stand der Technik bekannte Ultraschallwandler zur Bestimmung der Strömungsgeschwindigkeit eines durch ein Messrohr strömenden Mediums senden im Betrieb unabhängig von der aktuellen Prozesssituation ein Ultraschallsignal mit fester Frequenz und mit einer festen Strahlbreite aus.

Grundsätzlich ist die Qualität eines Ultraschallmesssignals, das ein Medium durchläuft, abhängig von den Absorptionseigenschaften des Mediums, der Viskosität des Mediums sowie von den aktuellen Prozessbedingungen. Die Qualität des Transmissionssignals mindernde Effekte sind beispielsweise die Dämpfung des Signals durch das Medium oder Verwehungseffekte bei hohen Fließgeschwindigkeiten im Fall einer Messung von strömenden Medien. Im Folgenden wird ein Ultraschallsignal, das ein Medium durchquert hat, als Empfangssignal bezeichnet.

Aus der Druckschrift DE 295 09 574 U1 ist ein Ultraschallwandler bekannt, bei dem zwischen dem Piezoelement und einem mediumseitig angeordneten Boden des Wandlergehäuses ein elektrisch isolierendes Material sowie zwei akustische Koppelschichten angeordnet sind, sodass eine elektrische Isolierung des Wandlers gegenüber dem Medium gewährleistet ist.

Die Druckschrift EP 2 148 322 A2 offenbart einen Ultraschallwandler mit einem Gehäuse, wobei in einem Bereich des Gehäuses zwei mechanische Resonatoren ausgebildet sind, die in Ausbreitungsrichtung von vorhandenen Gehäusewellen hintereinander angeordnet sind und die eine Reduzierung der Gehäusewellen bewirken.

Die Druckschrift US 4,505,160 betrifft einen Ultraschallwandler mit einem Wandlerelement, das sich für den Einsatz in heißen Medien eignet. Hierzu ist das Piezoelement auf einer akustischen Scheibe angeordnet und auf dem Piezoelement ist eine Anordnung aus mehreren Schichten angeordnet, sodass insgesamt gewährleistet werden kann, auch bei heißen Temperaturen der Druckkontakt des Piezoelementes auf das akustische Fenster aufrecht erhalten bleibt.

Zudem offenbart das Dokument WO 2020/083910 A1 einen Ultraschallwandler, mit zwei piezoelektrischen Elementen, wobei zwei separat steuerbare Elektroden an den piezoelektrischen Elementen angeordnet sind.

Weiterhin ist aus der US 2010/0313676 A1 ein Ultraschalldurchflussmessgerät bekannt, wobei die Eigenschaften des piezoelektrischen Elementes variiert werden, um eine Mehrfachfrequenzresonanz zu erhalten.

Zur Vermeidung oder Reduzierung der zuvor dargelegten Nachteile ist es Aufgabe der vorliegenden Erfindung einen Ultraschallwandler anzugeben, der eine Verbesserung der Qualität des Empfangssignals gewährleistet. Zudem ist es Aufgabe der Erfindung ein Verfahren zum Betreiben eines Ultraschallwandlers, ein Ultraschalldurchflussmessgerät und ein Verfahren zum Betreiben eines Ultraschalldurchflussmessgeräts anzugeben, das jeweils eine Verbesserung der Qualität eines Empfangssignals gewährleistet.

Gemäß der vorliegenden Erfindung wird die zuvor dargelegte Aufgabe dadurch gelöst, dass das elektroakustische Element wenigstens zwei elektroakustische Scheiben aufweist, wobei die wenigstens zwei elektroakustischen Scheiben übereinander angeordnet sind und wobei wenigstens eine elektroakustische Scheibe von der Steuereinheit zumindest zeitweise separat angeregt werden kann.

Erfindungsgemäß wurde erkannt, dass das elektroakustische Element eines Ultraschallwandlers modular ausgebildet sein kann, sodass es in unterschiedlicher Weise angeregt werden kann. Dies hat den Vorteil, dass Einfluss auf die Eigenschaften des im Betrieb erzeugten Ultraschallsignals genommen werden kann. Im Detail können die Eigenschaften des Ultraschallsignals an die Eigenschaften des Mediums und/oder an die aktuelle Prozesssituation angepasst werden, wodurch im Ergebnis die Qualität des Empfangssignals verbessert werden kann.

Im Betrieb kann beispielsweise genau eine elektroakustische Scheibe zur Schwingung angeregt werden, wobei die wenigstens zwei elektroakustischen Scheiben derart miteinander verbunden sind, dass die zweite elektroakustische Scheibe mitschwingt, sodass im Ergebnis die Resonanzfrequenz des durch das elektroakustische Element gebildeten Resonators durch die Kombination der wenigstens zwei elektroakustischen Scheiben bestimmt wird. Unter einer separaten Anregung im Sinne der Erfindung ist damit nicht gemeint, dass eine separat angeregte elektroakustische Scheibe alleine frei schwingt.

Durch die Ausgestaltung und/oder Ansteuerung der zweiten elektroakustischen Scheibe kann die Resonanzfrequenz des elektroakustischen Elements insgesamt beeinflusst werden, wodurch im Ergebnis die Frequenz des erzeugten Ultraschallsignals variiert werden kann. Dies wird nachfolgend für unterschiedliche Ausgestaltungen detaillierter ausgeführt.

Gemäß der Erfindung können die wenigstens zwei elektroakustischen Scheiben separat angesteuert werden. In diesem Fall sind beide elektroakustischen Scheiben separat mit der Steuereinheit verbunden. Im Betrieb können die wenigstens zwei Scheiben beispielsweise unterschiedlich angeregt werden. Denkbar ist auch, dass die elektroakustischen Scheiben zumindest zeitweise parallel oder in Serie geschaltet sind. Besonders bevorzugt sind die wenigstens zwei elektroakustischen Scheiben derart mit der Steuereinheit verbunden, dass im Betrieb zwischen unterschiedlichen Ansteuerungen der einzelnen elektroakustischen Scheiben umgeschaltet werden kann.

Gemäß einer weiteren Ausgestaltung ist das elektroakustische Element ein Piezoelement, also ein Element aus einem piezokeramischen Material, und/oder ein mikromechanisches Element eines kapazitiv mikromechanischen Ultraschallwandlers. Vorzugsweise ist weiterhin eine elektroakustische Scheibe eine Piezoscheibe, also eine Scheibe aus einem piezokeramischen Material, und/oder eine mikromechanische Scheibe eines kapazitiv mikromechanischen Ultraschallwandlers. Andere elektroakustische Elemente bzw. Scheiben sind für die Realisierung der Erfindung ebenfalls denkbar.

Besonders bevorzugt weisen die wenigstens zwei elektroakustischen Scheiben jeweils eine erste und eine zweite Stirnfläche auf, wobei mit dem elektroakustischen Element wenigstens drei Elektroden verbunden sind, wobei wenigstens eine Elektrode auf der dem akustischen Fenster zugewandten Stirnfläche der ersten elektroakustischen Scheiben angeordnet ist, wobei wenigstens eine Elektrode zwischen der ersten und der zweiten elektroakustischen Scheibe angeordnet ist, und wobei wenigstens eine Elektrode auf der dem akustischen Fenster abgewandten Stirnfläche der zweiten elektroakustischen Scheibe angeordnet ist.

Ist die elektroakustische Scheibe im Wesentlichen zylinderförmig ausgebildet, so entsprechen die Stirnflächen einer elektroakustischen Scheibe den einander gegenüberliegenden Grundflächen des Zylinders. Diese Grundflächen können kreisförmig ausgebildet sein oder auch die Form eines Vielecks oder einer Ellipse aufweisen.

Die erste und/oder die zweite elektroakustische Scheibe ist gemäß einer Ausgestaltung in Richtung der Höhe des Zylinders polarisiert. Sind die Elektroden auf den Stirnfläche positioniert, so vollzieht die elektroakustische Scheibe im Betrieb longitudinale Schwingungen und wird mechanisch zwischen den Elektroden ausgelenkt. Alternativ kann auch eine transversale Schwingungsanregung der elektroakustischen Scheibe realisiert werden. In diesem Fall sind die Elektroden seitlich an dem elektroakustischen Element angeordnet und bei Anlegen einer Spannung erfolgt die Schwingung senkrecht zu den Elektroden.

Besonders bevorzugt sind auf wenigstens einer Stirnfläche der ersten und/oder der zweiten elektroakustischen Scheibe wenigstens zwei Elektroden angeordnet, wobei die wenigstens zwei Elektroden sich in ihrer Form und/oder ihrer Größe unterscheiden.

Besonders bevorzugt sind die Elektroden geometrisch derart ausgebildet, dass das erzeugte Ultraschallsignal rotationssysmmetrisch ist. Gemäß dieser Ausgestaltung sind die Elektroden besonders bevorzugt kreisförmig ausgebildet. Insbesondere die kreisförmige Ausgestaltung ist in den Anwendungsbereichen vorteilhaft, in denen keine Vorzugsrichtung existiert.

Neben einer symmetrischen Strahlform kann durch entsprechend geometrische Ausgestaltung der Elektroden auch eine unsymmetrische Strahlform des Ultraschallsignals realisiert sein.

Besonders bevorzugt unterscheiden sich wenigstens zwei Elektroden in ihrem Durchmesser.

Beispielsweise umgibt eine als Ringelektrode ausgebildete erste Elektrode eine zweite innerhalb der Ringelektrode liegende zweite Elektrode. Vorzugsweise sind gemäß dieser Ausgestaltung beide Elektroden kreisförmig oder elliptisch ausgebildet. Gemäß dieser Ausgestaltung können die beiden Elektroden im Betrieb einzeln oder parallel angesteuert werden. Gemäß einer Ausgestaltung kann im Betrieb also nur die innere Elektrode angesteuert werden, oder die innere Elektrode kann zu der äußeren Elektrode parallel angesteuert werden. Denkbar ist ebenfalls, dass nur die äußere Ringelektrode angesteuert wird.

Zudem ist es ebenso vorteilhaft, wenn wenigstens drei Elektroden auf derselben Stirnfläche der wenigstens einen elektroakustischen Scheibe angeordnet sind, wobei wenigstens zwei Elektroden als ineinanderliegende Ringelektroden ausgebildet sind und eine Elektrode als im Wesentlichen kreisförmige Elektrode innerhalb der Ringelektroden angeordnet ist. Auch in dieser Kombination können die Elektroden im Betrieb separat oder parallel angesteuert werden.

Die Form und/oder die Größe der Elektroden hat bei Anregung der elektroakustischen Scheibe Einfluss auf die Form des erzeugten Ultraschallsignals.

Werden die wenigstens drei separat ansteuerbaren Elektroden im Betrieb unterschiedlich angeregt, so kann die Strahlform des ausgesendeten Ultraschallsignals beispielsweise an das zu messende Medium oder an die aktuelle Messsituation angepasst werden.

Eine solche Ausgestaltung weist den Vorteil auf, dass das erzeugte Ultraschallsignal besonders flexibel an die Messsituation angepasst werden kann, wodurch die Qualität des Empfangssignals noch weiter verbessert werden kann.

Neben der Ausgestaltung als Ringelektrode mit einer innenliegenden Elektrode sind ebenfalls andere Elektrodenformen denkbar und vorteilhaft. Beispielsweise kann auf einer Stirnfläche eine Mehrzahl an Elektroden vorhanden sein, wobei im Betrieb die einzelnen Elektroden zur Einstellung der Strahlform, insbesondere der Strahlbreite, des ausgesendeten Ultraschallsignals separat und/oder in unterschiedlichen Kombinationen angesteuert werden können.

Gemäß einer weiteren Ausgestaltung ist wenigstens eine Elektrode elliptisch ausgebildet. Vorzugsweise sind wenigstens zwei Elektroden elliptisch ausgebildet, wobei wenigstens eine elliptisch ausgebildete Elektrode wenigstens eine weitere elliptisch ausgebildete Elektrode umgibt. Auch gemäß dieser Ausgestaltung können die Elektroden sowohl separat als auch parallel angesteuert werden.

Gemäß einer weiter bevorzugten Ausgestaltung ist eine Mehrzahl an separat ansteuerbaren Elektroden vorhanden, wobei die Mehrzahl an Elektroden auf derselben Stirnfläche wenigstens einer elektroakustischen Scheibe angeordnet ist und wobei im Betrieb die einzelnen Elektroden zur Einstellung der Strahlform, insbesondere der Strahlbreite, des ausgesendeten Ultraschallsignals in unterschiedlichen Kombinationen angesteuert werden können.

Unter einer Mehrzahl an Elektroden wird im Rahmen der Erfindung eine Anzahl von wenigstens drei Elektroden oder wenigstens vier Elektroden oder wenigstens fünf Elektroden verstanden.

Beispielsweise können die Elektroden sechseckig und/oder rechteckig, vorzugsweise quadratisch, ausgebildet sein, sodass sich insgesamt ein Raster mit separat ansteuerbaren Elektroden ergibt. Die angesteuerte geometrische Form kann gemäß dieser Ausgestaltung besonders flexibel eingestellt werden. Besonders bevorzugt ist auf einer Stirnfläche eine Kombination aus sieben oder 19 sechseckförmigen Waben oder eine Kombination aus 4, 6, 9 oder 12 Quadraten angeordnet. Diese Ausgestaltung weist den Vorteil auf, dass die Strahlform einerseits besonders flexibel eingestellt werden kann und weiterhin neben der symmetrischen Form auch als unsymmetrische Strahlform ausgebildet sein kann.

Durch die Ansteuerung von unterschiedlichen Elektroden kann im Betrieb insofern auch die Form des Ultraschallsignals variiert werden. Durch die alternative Ansteuerung von zwei Elektrodengeometrien kann im Betrieb in vorteilhafter Weise zwischen zwei Strahlformen umgeschaltet werden. Insofern weist diese Ausgestaltung den Vorteil auf, dass das erzeugte Ultraschallsignal besonders gut auf die aktuelle Messsituation eingestellt werden kann.

Ist das zu messende Medium ein strömendes Medium, so kann es passieren, dass das in das Medium ausgesendete Ultraschallsignal die Empfangseinheit aufgrund des Verwehungseffektes nicht erreicht. In diesem Fall ist es vorteilhaft die Strahlbreite zu vergrößern, sodass auch hohe Strömungsgeschwindigkeiten erfasst werden können. Zudem kann eine Überlagerung von Reflexionen an Oberflächen der Messumgebung, wie beispielsweise an der Innenwand eines Messrohrs, mit dem Empfangssignal reduziert werden, wenn die Strahlbreite des erzeugten Ultraschallsignals reduziert wird.

Gemäß einer weiterhin bevorzugten Ausgestaltung ist wenigstens eine Elektrode als Masseelektrode ausgebildet, wobei die Masseelektrode vorzugsweise gemeinsame Masseelektrode für die wenigstens zwei anderen Elektroden ist. Besonders bevorzugt ist die Masseelektrode auf der dem akustischen Fenster zugewandten Stirnfläche des elektroakustischen Elementes angeordnet. In diesem Fall hat die Masseelektrode dasselbe Potenzial wie das Gehäuse. Besonders bevorzugt bedeckt die Masseelektrode die Stirnfläche, auf der die Masseelektrode angeordnet ist, im Wesentlichen vollständig.

Besonders bevorzugt ist es weiterhin, wenn zwischen den wenigstens zwei auf einer Stirnfläche angeordneten Elektroden wenigstens eine Einkerbung und/oder wenigstens ein Spalt angeordnet ist. Diese Ausgestaltung weist den Vorteil auf, dass ein Übersprechen zwischen den einzelnen Elektroden im Betrieb vermieden oder zumindest reduziert werden kann.

Gemäß einer weiter bevorzugten Ausgestaltung ist die Steuereinheit derart ausgebildet und mit den Elektroden verbunden, dass wenigstens zwei Elektroden zumindest zeitweise mit einer unterschiedlichen Phase und/oder Amplitude ansteuerbar sind. besonders bevorzugt sind die wenigstens zwei Elektroden, die mit einer unterschiedlichen Phase und/oder Amplitude angesteuert werden, auf derselben Stirnfläche angeordnet. Diese Ausgestaltung weist den Vorteil auf, dass die Richtung des ausgesendeten Ultraschallsignals beeinflusst werden kann.

Gemäß einer besonders bevorzugten Ausgestaltung weisen wenigstens zwei elektroakustische Scheiben im Wesentlichen die gleiche Dicke auf. Die Dicke einer elektroakustischen Scheibe ist im Fall einer zylinderförmigen Scheibe gleichbedeutend mit der Höhe der Scheibe.

Zudem ist es auch vorteilhaft, wenn wenigstens zwei elektroakustische Scheiben eine unterschiedliche Dicke aufweisen. Beispielsweise kann die zur Anregung vorgesehene elektroakustische Scheibe dicker ausgebildet sein als die auf dieser Scheibe angeordnete zweite elektroakustische Scheibe. Denkbar ist ebenfalls, dass das elektroakustische Element eine Mehrzahl an elektroakustischen Scheiben aufweist, die teilweise eine gleiche Dicke und/oder teilweise eine unterschiedliche Dicke aufweisen. Diese Scheiben können im Betrieb parallel oder in Serie betrieben werden.

Gemäß einer weiteren bevorzugten Ausgestaltung weisen wenigstens zwei elektroakustische Scheiben das gleiche Material auf. Beispielsweise sind wenigstens zwei elektroakustische Scheiben aus einer Piezokeramik ausgebildet.

Weiterhin ist es bevorzugt, wenn wenigstens zwei elektroakustische Scheiben ein unterschiedliches Material aufweisen.

Besonders bevorzugt ist wenigstens eine elektroakustische Scheibe mit einer einstellbaren Last, insbesondere einer induktiven und/oder kapazitiven Last, verbunden. Im Betrieb kann durch Anlegen der Last eine akustische Impedanz in diese elektroakustische Scheibe transformiert werden, die die Schwingung der anderen, aktiv angeregten elektroakustischen Scheibe beeinflusst. Im Ergebnis kann so die Resonanzfrequenz des gesamten elektroakustischen Elementes und damit die Frequenz des erzeugten Ultraschallsignals verändert werden. Im Betrieb kann so die Frequenz des erzeugten Ultraschallsignals beispielsweise derart angepasst werden, dass die Absorption durch das Medium minimal ist.

Denkbar ist ebenfalls, dass eine Mehrzahl von elektroakustischen Scheiben mit unterschiedlichen Lasten beaufschlagt werden.

Beispielsweise kann die einstellbare Last als Gyrator ausgebildet sein. Weiterhin kann die Last eine hochohmige Last sein. Zudem kann die Last mit einem Schalter derart verbunden sein, dass die Last im Betrieb bedarfsweise zu geschaltet werden kann. Gemäß dieser Ausgestaltung kann im Betrieb besonders leicht zwischen der Aussendung von zwei unterschiedlichen Frequenzen umgeschaltet werden.

Gemäß der vorliegenden Erfindung wird die eingangs dargelegte Aufgabe durch ein eingangs genanntes Verfahren zum Betreiben eines Ultraschallwandlers in einer Messumgebung, dadurch gelöst, dass der Ultraschallwandler gemäß einer der zuvor beschriebenen Ausgestaltungen ausgebildet ist, dass der Ultraschallwandler ein Ultraschallsignal in ein Medium aussendet und
dass in Abhängigkeit von der Viskosität des Mediums und/oder der Absorption des erzeugten Ultraschallsignals durch das Medium das elektroakustische Element, insbesondere wenigstens eine elektroakustische Scheibe, angesteuert wird.

Wenn es heißt, dass in Abhängigkeit von der Viskosität des Mediums und/oder in Abhängigkeit von der Absorption des erzeugten Ultraschallsignals durch das Medium das elektroakustische Element angesteuert wird, so ist damit gemeint, dass wenn der Wert der Viskosität des Mediums unterhalb von einem Grenzwert liegt, die elektroakustischen Scheiben derart angesteuert werden, dass das Ultraschallsignal eine erste Frequenz aufweist, liegt der Wert der Viskosität oberhalb von einem Grenzwert, werden die elektroakustischen Scheiben derart angesteuert, dass das Ultraschallsignal eine zweite Frequenz aufweist.

Alternativ oder zusätzlich kann die Transmission des Ultraschallsignals durch das Medium bei den wenigstens zwei zu realisierenden Frequenzen bestimmt werden, wobei das elektroakustische Element dann derart angesteuert wird, das ein Ultraschallsignal mit einer Frequenz ausgesendet werden, deren Absorption minimal ist.

Besonders bevorzugt kann im Betrieb der Ultraschallwandler zwischen zwei Frequenzen, beispielsweise zwischen 1 MHz und 2 MHz, umgeschaltet werden.

Beispielsweise kann das Verfahren zum Betreiben eines Ultraschallwandlers zur Messung des Durchflusses eines strömenden Mediums oder auch zur Füllstandmessung eingesetzt werden.

Grundsätzlich kann das Medium, in das das Ultraschallsignal ausgesendet wird ein flüssiges Medium oder ein gasförmiges Medium sein.

Gemäß einer weiteren Lehre der vorliegenden Erfindung wird die eingangs dargelegte Aufgabe durch ein eingangs beschriebenes Ultraschalldurchflussmessgerät dadurch gelöst, dass der wenigstens eine Ultraschallwandler gemäß einer der zuvor beschriebenen Ausgestaltungen ausgebildet ist.

Gemäß einer bevorzugten Ausgestaltung sind wenigstens zwei Ultraschallwandler vorhanden, wobei beide Ultraschallwandler als Ultraschallsender und als Ultraschallempfänger ausgebildet sind und wobei beide Ultraschallwandler gemäß einer der zuvor beschriebenen Ausgestaltungen ausgebildet sind. Die beiden Ultraschallwandler können hinsichtlich der Ausgestaltung des elektroakustischen Elementes gleich ausgebildet sein. Alternativ kann der Aufbau der elektroakustischen Elemente der beiden Ultraschallwandler sich unterscheiden.

Gemäß einer Ausgestaltung unterscheiden sich die Ultraschallwandler hinsichtlich der Anzahl und/oder der Geometrien der Elektroden.

Besonders bevorzugt ist in der Steuer- und Auswerteeinheit ein Zusammenhang zwischen der Viskosität des Mediums und/oder der Absorption des Ultraschallsignals durch das Medium und der Ansteuerung des elektroakustischen Elementes hinterlegt.

Vorzugsweise weist das Ultraschalldurchflussmessgerät eine weitere Sensoreinheit zur Erfassung der Viskosität des Mediums auf.

Gemäß einer weiteren Ausgestaltung ist in der Steuer- und Auswerteeinheit ein Zusammenhang zwischen der Fließgeschwindigkeit und/oder der Viskosität des zu messenden Mediums bzw. der Dämpfung des Ultraschallsignals durch das zu messende Medium und der Ansteuerung der Elektroden hinterlegt.

Gemäß einer weiteren Lehre der vorliegenden Erfindung wird die eingangs dargelegte Aufgabe durch ein eingangs beschriebenes Verfahren zum Betreiben eines Ultraschalldurchflussmessgeräts dadurch gelöst, dass das Ultraschalldurchflussmessgerät gemäß einer der zuvor beschriebenen Ausgestaltungen ausgebildet ist und dass der wenigstens eine Ultraschallwandler nach einem oben beschriebenen Verfahren betrieben wird.

Gemäß einer Ausgestaltung weist das erfindungsgemäße Ultraschalldurchflussmessgerät wenigstens zwei Ultraschallwandler auf, wobei beide Ultraschallwandler als Ultraschallsender und als Ultraschallempfänger ausgebildet sind, wobei beide Ultraschallwandler gemäß einer der zuvor beschriebenen Ausgestaltungen ausgebildet sind, wobei beide Ultraschallwandler im Hinblick auf die Ausgestaltung des elektroakustischen Elementes gleich ausgebildet sind und wobei die beiden Ultraschallwandler im Betrieb gleich angesteuert werden

Im Detail werden die beiden Ultraschallwandler derart angesteuert, dass sie dieselbe Frequenz aussenden. Gemäß dieser Ausgestaltung arbeiten die Ultraschallwandler im Sendemodus und im Empfangsmodus auf derselben Frequenz.

Gemäß einer weiteren Ausgestaltung des Verfahrens sendet ein erster Ultraschallwandler ein Ultraschallsignal mit einer ersten Frequenz f₁ und ein zweiter Ultraschallwandler sendet ein Ultraschallsignal mit einer zweiten Frequenz f₂. Gemäß dieser Ausgestaltung arbeiten die Ultraschallwandler im Sendemodus und im Empfangsmodus auf unterschiedlichen Frequenzen. Im Detail wird der erste Ultraschallwandler im Empfangsmodus derart betrieben, dass er eine Frequenz f₂ empfängt, der zweite Ultraschallwandler wird im Empfangsmodus derart betrieben, dass eine Frequenz f₁ empfängt.

Gemäß einer weiteren Ausgestaltung steuert die Steuer- und Auswerteeinheit in Abhängigkeit von wenigstens einer Zustandsgröße wenigstens zwei Elektroden an, wobei im Betrieb in Abhängigkeit von der wenigstens einen Zustandsgröße die Ansteuerung der wenigstens zwei Elektroden geändert wird.

Die relevante Zustandsgröße ist dabei die Fließgeschwindigkeit des strömenden Mediums und/oder die Viskosität des Mediums und/oder die Absorption des Ultraschallsignals durch das Medium.

Gemäß einer Ausgestaltung wird durch die Steuer- und Auswerteeinheit die Amplitude und/oder das Frequenzspektrum eines Empfangssignals analysiert. In Abhängigkeit von dem Wert der transmittierten Intensität und/oder dem Frequenzspektrum des Empfangssignals werden die mit dem elektroakustischen Element verbundenen Elektroden angesteuert.

Dabei ist der Grenzwert zur Umschaltung der Ansteuerung der Elektroden von dem zu messenden Medium abhängig. Da Gase eine kleinere Schallgeschwindigkeit haben als Flüssigkeiten, womit die Schallwellen eine längere Zeit unterwegs sind, wirkt sich der Verwehungseffekt bei gasförmigen Medien deutlich stärker aus als bei flüssigen Medien. Der Grenzwert zur Umschaltung zu einer breiteren Strahlform ist bei gasförmigen Medien daher vorzugsweise niedriger als bei flüssigen Medien.

Zudem kann wenigstens ein zusätzlicher Sensor zur Messung wenigstens einer weiteren Zustandsgröße des Systems, beispielsweise zur Messung der Viskosität des Mediums vorhanden sein.

Gemäß einer bevorzugten Ausgestaltung werden wenigstens zwei auf derselben Stirnfläche einer elektroakustischen Scheibe angeordneten Elektroden zumindest zeitweise parallel angesteuert. Die Einstellung der Strahlform ist gemäß dieser Ausgestaltung besonders flexibel.

Zudem ist es weiterhin bevorzugt, wenn wenigstens zwei Elektroden zumindest zeitweise mit unterschiedlicher Phase und/oder mit unterschiedlicher Amplitude angesteuert werden. Insbesondere bei hohen Strömungsgeschwindigkeiten kann die Richtung des ausgesendeten Ultraschallsignals derart beeinflusst werden, dass das ausgesendete Ultraschallsignal entgegen Strömungsrichtung geschwenkt wird. Hierzu werden beispielsweise wenigstens zwei Elektroden, die in Strömungsrichtung hintereinander angeordnet sind, zeitlich versetzt entgegen der Strömungsrichtung angesteuert. So kann in vorteilhafter Weise dem Verwehungseffekt durch ein Schwenken des Ultraschallsignals entgegengewirkt werden.

Gemäß einer weiteren bevorzugten Ausgestaltung des Verfahrens sind wenigstens zwei Ultraschallwandler vorhanden, wobei die wenigstens zwei Ultraschallwandler als Ultraschallsender und als Ultraschallempfänger ausgebildet sind und wobei beide Ultraschallwandler gemäß einer der oben beschriebenen Ausgestaltungen ausgebildet sind, wobei beide Ultraschallwandler im Hinblick auf die Ausgestaltung des elektroakustischen Elements gleich ausgebildet sind und wobei die beiden Ultraschallwandler im Betrieb gleich angesteuert werden.

Alternativ können die beiden Ultraschallwandler auch unterschiedliche elektroakustische Elemente aufweisen und/oder im Betrieb derart angesteuert werden, dass sie eine unterschiedliche Frequenz und/oder eine unterschiedliche Strahlbreite aufweisen. Die Ausgestaltung weist den Vorteil auf, dass die Gesamtbandbreite der Durchflussmessung erhöht werden kann.

Gemäß einer weiteren Ausgestaltung werden die Ultraschallwandler im Sendebetrieb anders betrieben als im Empfangsbetrieb. Beispielsweise können die Ultraschallwandler ein Ultraschallsignal mit einer geringen Strahlbreite aussenden und dann durch Umschalten der Ansteuerung derart betrieben werden, dass sie eine breitere akustisch wirksame Empfangsfläche aufweisen.

Es gibt nun eine Vielzahl von Möglichkeiten den erfindungsgemäßen Ultraschallwandler, das erfindungsgemäße Ultraschalldurchflussmessgerät und die erfindungsgemäßen Verfahren auszugestalten und weiterzubilden. Hierzu wird verwiesen auf die den unabhängigen Patentansprüchen nachgeordneten Patentansprüche sowie auf die Beschreibung der nachfolgenden Ausführungsbeispiele zusammen mit der Zeichnung. In der Zeichnung zeigen
- Fig.1a: einen aus dem Stand der Technik bekannten Ultraschallwandler,
- Fig. 1b: ein aus dem Stand der Technik bekanntes Piezoelement,
- Fig. 2: ein erstes Ausführungsbeispiel eines erfindungsgemäßen elektroakustischen Elements,
- Fig. 3: ein weiteres Ausführungsbeispiel eines erfindungsgemäßen elektroakustischen Elements,
- Fig. 4: ein weiteres Ausführungsbeispiel eines erfindungsgemäßen elektroakustischen Elements,
- Fig. 5: ein weiteres Ausführungsbeispiel eines erfindungsgemäßen elektroakustischen Elements,
- Fig. 6: ein weiteres Ausführungsbeispiel eines erfindungsgemäßen elektroakustischen Elements,
- Fig. 7: ein weiteres Ausführungsbeispiel eines erfindungsgemäßen elektroakustischen Elements,
- Fig. 8: ein weiteres Ausführungsbeispiel eines erfindungsgemäßen elektroakustischen Elements,
- Fig. 9a-9c: Draufsichten auf weitere erfindungsgemäße elektroakustische Elemente,
- Fig. 10: ein Ausführungsbeispiel eines erfindungsgemäßen Ultraschalldurchflussmessgeräts,
- Fig. 11: ein Ausführungsbeispiel eines erfindungsgemäßen Verfahrens zum Betreiben eines Ultraschallwandlers und
- Fig. 12: ein Ausführungsbeispiel eines erfindungsgemäßen Verfahrens zum Betreiben eines Ultraschalldurchflussmessgeräts.

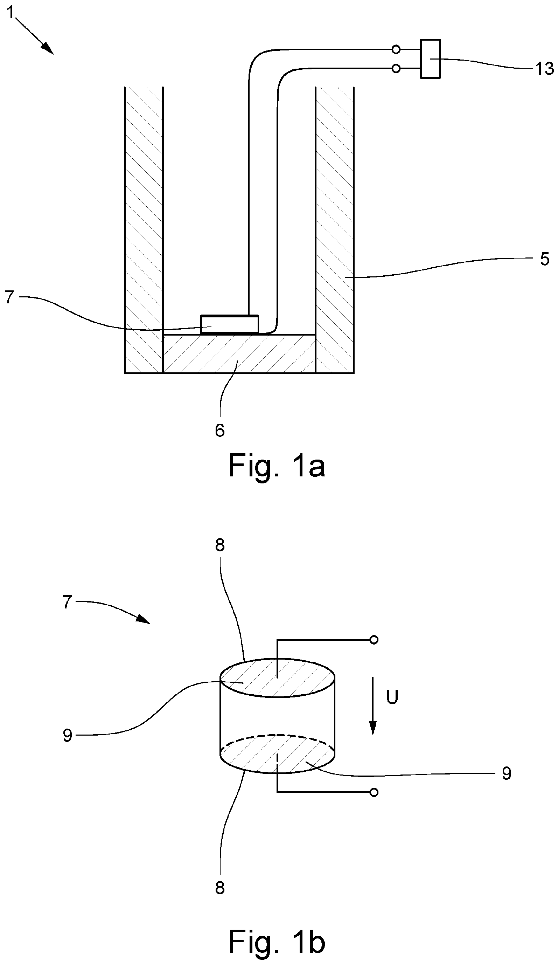

Fig. 1a zeigt einen aus dem Stand der Technik bekannten Ultraschallwandler 1, der für den Einsatz in einem Ultraschalldurchflussmessgerät 3 geeignet ist. Der Ultraschallwandler 1 weist ein Gehäuse 5 und ein akustisches Fenster 6 auf. Zudem ist ein elektroakustisches Element 7 vorhanden, das als Piezoelement ausgestaltet ist und das auf dem akustischen Fenster 6 angeordnet ist. Im Betrieb wird an das elektroakustische Element 7 eine Spannung angelegt, wodurch das elektroakustische Element 7 in Schwingung versetzt wird. Die Weitergabe dieser Schwingung durch das akustische Fenster 6 erzeugt im Betrieb ein Ultraschallsignal in dem vor dem akustischen Fenster 6 angeordneten Medium.

Fig. 1b zeigt das elektroakustische Element 7 in vergrößerter Ansicht. Auf den Stirnflächen 8 des elektroakustischen Elementes 7 sind Elektroden 9 angeordnet, an die im Betrieb eine Spannung zur Anregung des elektroakustischen Elements 7 gelegt wird. Grundsätzlich bestimmt die Form der Elektroden 9 die Form des von dem elektroakustischen Element 7 ausgesendeten Ultraschallsignals, insbesondere die Breite des Ultraschallkegels. Die Frequenz des erzeugten Ultraschallsignals ist abhängig von der Höhe des elektroakustischen Elements. Üblicherweise wird ein elektroakustisches Element so angeregt, dass es in Resonanz schwingt. Dabei schwingt das elektroakustische Element derart, dass die Höhe des elektroakustischen Elementes einem ganzzahligen, vorzugsweise ungeraden, Vielfachen der halben Wellenlänge entspricht.

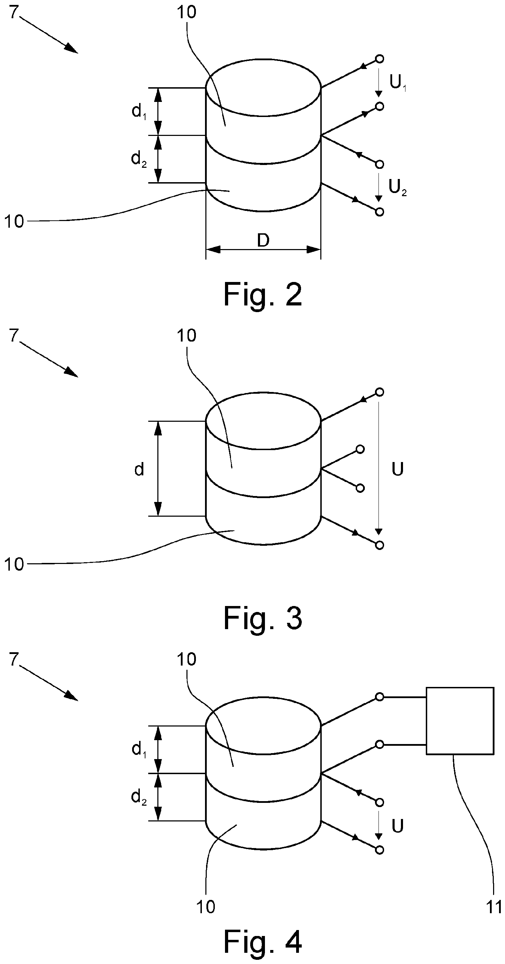

Fig. 2 zeigt ein erstes Ausführungsbeispiel eines erfindungsgemäßen elektroakustischen Elements 7, das als Piezoelement ausgestaltet ist. Das elektroakustische Element 7 weist zwei elektroakustische Scheiben 10 in Form von Piezoscheiben auf. In dem dargestellten Ausführungsbeispiel weisen die elektroakustischen Scheiben 10 die gleiche Dicke sowie das gleiche Material auf. Zudem sind die elektroakustischen Scheiben 10 im Betrieb separat ansteuerbar. Im Detail können die elektroakustischen Scheiben 10 einzeln mit einer Spannung beaufschlagt werden. Im Betrieb können die elektroakustischen Scheiben 10 insofern mit der gleichen Spannung oder auch mit unterschiedlichen Spannungen beaufschlagt werden.

Fig. 3 zeigt ein weiteres Ausführungsbeispiel eines elektroakustischen Elements 7 in Form eines Piezoelements, wobei das elektroakustische Element 7 ebenfalls zwei elektroakustische Scheiben 10 gleicher Dicke aufweist. Alternativ zu der separaten Ansteuerung der einzelnen elektroakustischen Scheiben 10 können die elektroakustischen Scheiben 10 auch zusammen angeregt werden.

Fig. 4 zeigt ein weiteres Ausführungsbeispiel eines elektroakustischen Elements 7 in Form eines Piezoelements, wobei das elektroakustische Element 7 zwei elektroakustische Scheiben 10 in Form von Piezoscheiben aufweist. Im Betrieb wird die untere elektroakustische Scheibe durch Anlegen einer Spannung angeregt. Die obere Scheibe ist mit einer elektrischen Last 11 verbunden, die im Betrieb die Schwingung der oberen elektroakustischen Scheibe 10 beeinflusst. Die Resonanzfrequenz der Kombination der beiden elektroakustischen Scheiben 10 kann im Betrieb auf diese Weise verstimmt werden, sodass das auch die Frequenz des erzeugten Ultraschallsignals angepasst werden kann.

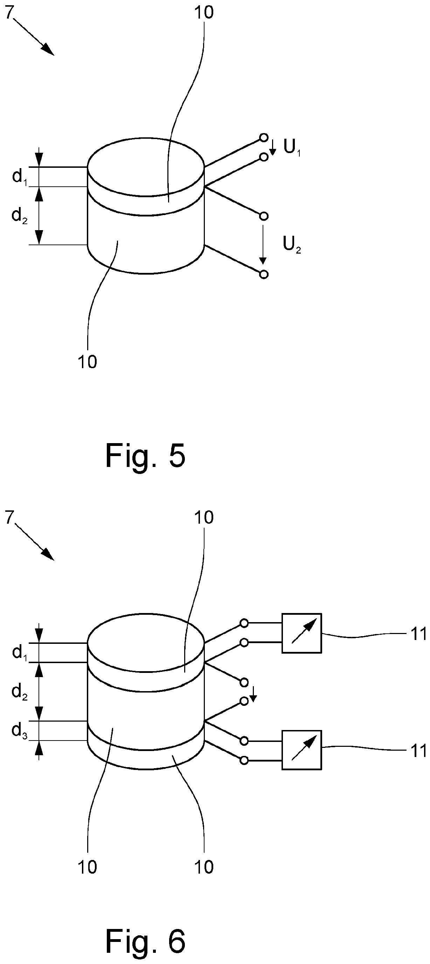

Fig. 5 zeigt ein Ausführungsbeispiel eines erfindungsgemäßen elektroakustischen Elements 7 in Form eines Piezoelements, wobei das elektroakustische Element 7 zwei elektroakustische Scheiben 10 Form von Piezoscheiben aufweist. Im Unterschied zu den in den Fig. 2 bis 4 dargestellten Ausführungsbeispielen weisen die elektroakustischen Scheiben 10 eine unterschiedliche Dicke auf. Die untere elektroakustische Scheibe 10 weist eine Dicke d₂ auf, die größer ist als die Dicke d₁ der oberen elektroakustischen Scheibe.

In Fig. 6 ist ein weiteres Ausführungsbeispiel eines elektroakustischen Elements 7 in Form eines Piezoelements dargestellt, wobei das elektroakustische Element 7 drei elektroakustische Scheiben 10 in Form von Piezoscheiben umfasst. Das dargestellte Ausführungsbeispiel ist derart ausgestaltet, dass im Betrieb an die mittlere elektroakustische Scheibe 10, die eine größere Dicke d₂ als die beiden äußeren elektroakustischen Scheiben 10 aufweist, eine Spannung zur Anregung des elektroakustischen Elements 7 angelegt wird. Die beiden äußeren elektroakustischen Scheiben sind jeweils mit einer einstellbaren Last verbunden, durch die im Betrieb die Schwingung der Kombination aus den drei elektroakustischen Scheiben beeinflusst werden kann.

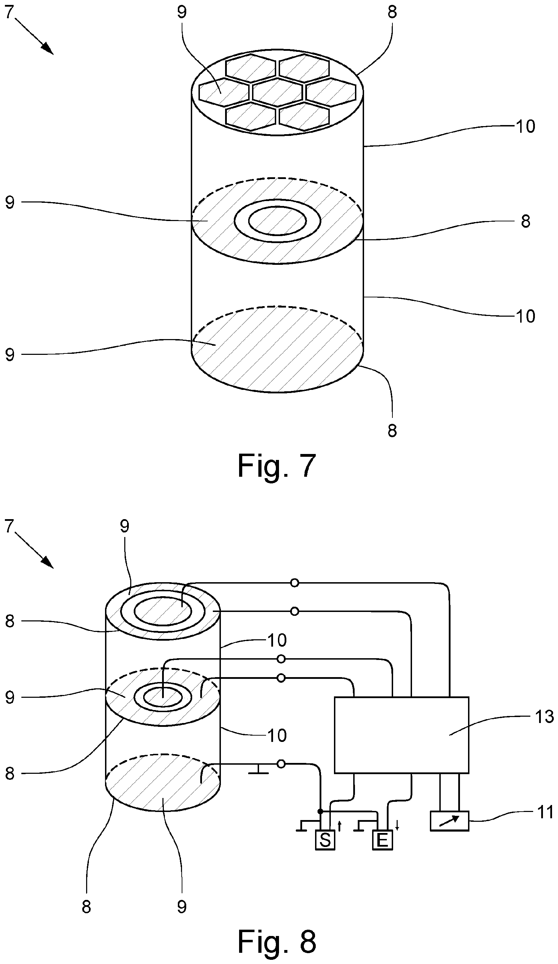

Fig. 7 zeigt ein weiteres Ausführungsbeispiel eines elektroakustischen Elements 7 in Form eines Piezoelements, wobei das elektroakustische Element 7 zwei elektroakustische Scheiben 10 in Form von Piezoscheiben aufweist. Jede elektroakustische Scheibe 10 weist eine obere Stirnfläche 8 und eine untere Stirnfläche 8 auf, wobei die elektroakustischen Scheiben 10 über die obere Stirnfläche 8 des unteren elektroakustischen Elements 10 und die untere Stirnfläche 8 des oberen elektroakustischen Elements 10 miteinander verbunden sind. Auf der unteren Stirnfläche 8 der unteren elektroakustischen Scheibe 10 ist eine Elektrode 9 angeordnet, die als Masseelektrode ausgebildet ist. Diese Elektrode dient für sämtliche anderen Elektroden 9, die mit dem elektroakustischen Element 7 verbunden sind, als Masseelektrode. Auf der oberen Stirnfläche 8 der unteren elektroakustischen Scheibe 10 ist eine äußere Ringelektrode 9 und eine weitere innerhalb der Ringelektrode 9 angeordnete Elektrode vorhanden. Auf der oberen Stirnfläche der oberen elektroakustischen Scheibe 8 ist eine Mehrzahl von sechseckigen Elektroden 9 angeordnet, die im Betrieb einzeln oder auch parallel angesteuert werden können. Im Betrieb kann entweder eine oder auch beide elektroakustischen Scheiben angeregt werden, wobei durch eine unterschiedliche Ansteuerung der Elektroden auch die Strahlform des erzeugten Ultraschallsignals beeinflusst werden kann.

Fig. 8 zeigt ein weiteres Ausführungsbeispiel eines erfindungsgemäßen elektroakustischen Elements 7, das als Piezoelement ausgebildet ist. Das elektroakustische Element 7 weist ebenfalls zwei übereinander angeordnete elektroakustische Scheiben 10 in Form von Piezoscheiben auf, wobei auf den Stirnflächen 7 der elektroakustischen Scheiben 10 jeweils wenigstens eine Elektrode 9 angeordnet ist.

Auf der oberen Stirnfläche 8 der unteren elektroakustischen Scheibe 10 und auf der oberen Stirnfläche 8 der oberen elektroakustischen Scheibe 10 sind jeweils zwei separat oder parallel ansteuerbare Elektroden 9 angeordnet, wobei jeweils eine äußere Ringelektrode 9 eine innere kreisförmige Elektrode 9 umgibt.

Im Betrieb wird an wenigstens eine auf der oberen Stirnfläche 8 der unteren elektroakustischen Scheibe 10 und an die auf der unteren Stirnfläche 8 der unteren elektroakustischen Scheibe 10 angeordnete Elektrode 9 eine Spannung zur Anregung der unteren elektroakustischen Scheibe 10 angelegt. Durch die Anregung der unteren elektroakustischen Scheibe 10 wird im Betrieb die obere elektroakustische Scheibe 10 ebenfalls zur Schwingung angeregt. Zwischen wenigstens einer Elektrode 9 auf der unteren Stirnfläche 8 der oberen elektroakustischen Scheibe 10 und wenigstens einer auf der oberen Stirnfläche 8 der oberen elektroakustischen Scheibe 10 angeordneten Elektrode 9 liegt eine zusätzliche elektrische Last an, über die im Betrieb die Schwingung der oberen elektroakustischen Scheibe 10 gedämpft werden kann, sodass im Ergebnis die Resonanzschwingung des elektroakustischen Elementes 7 insgesamt verstimmt werden kann. Die Steuereinheit 13 ist im dargestellten Ausführungsbeispiel als Multiplexer oder als schaltbare Matrix ausgebildet. Im Ergebnis kann mittels des dargestellten Ausführungsbeispiels sowohl durch die Mehrzahl an verschiedenen Elektroden 9 die Strahlform angepasst werden als auch durch die gesonderte Ansteuerung der elektroakustischen Scheiben 10 die Frequenz des erzeugten Ultraschallsignals beeinflusst werden kann.

Zudem kann die dargestellte elektroakustische Scheibe im Betrieb im Sendemodus anders betrieben werden als im Empfangsmodus.

Das dargestellte Ausführungsbeispiel ist insofern besonders flexibel einstellbar im Hinblick auf die Eigenschaften des erzeugten Ultraschallsignals.

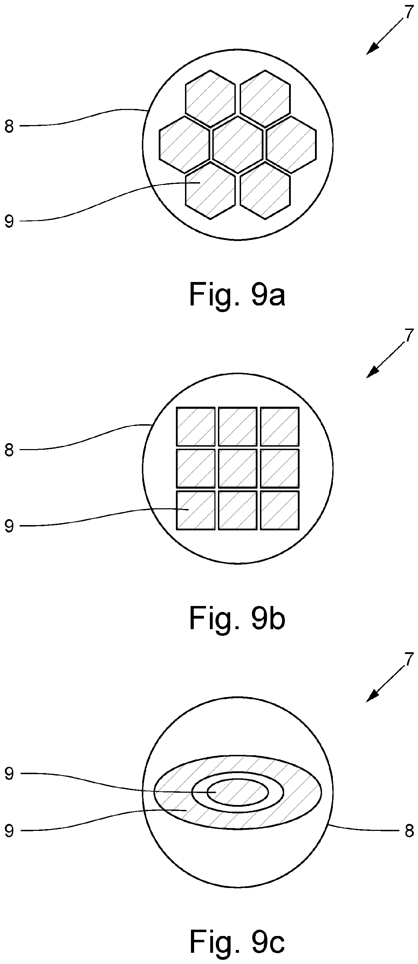

Die Fig. 9a bis 9c zeigen jeweils Ausführungsbeispiele von elektroakustischen Elementen 7 in Draufsicht auf die obere Stirnfläche 8 einer elektroakustischen Scheibe, wobei die Elektroden 9 unterschiedliche Formen aufweisen. Im Detail zeigt Fig. 9a eine wabenförmige Struktur aus sieben Elektroden, wobei jede einzelne, separat ansteuerbare Elektrode 9 sechseckig ausgebildet ist. Fig. 9b zeigt eine Kombination aus neun separat ansteuerbaren Elektroden, wobei jede einzelne Elektrode 9 rechteckig, insbesondere quadratisch ausgebildet ist. Beide Ausführungsbeispiele weisen den Vorteil auf, dass unterschiedliche Kombinationen an Elektroden 9 parallel angesteuert werden können. Damit lassen sich im Betrieb besonders viele Strahlformen, insbesondere auch unsymmetrische Strahlformen einstellen. Fig. 9c zeigt ein Ausführungsbeispiel, in dem die Elektroden 9 eine elliptische Form aufweisen. Gemäß dem dargestellten Ausführungsbeispiel umgibt eine ringförmige elliptische Elektrode 9 eine innenliegende elliptische Elektrode 9.

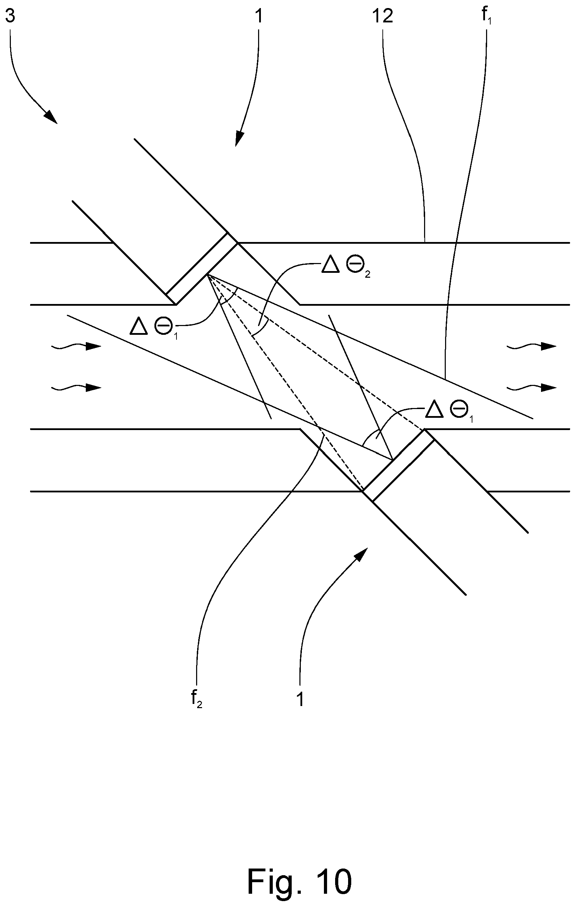

Fig. 10 zeigt ein erstes Ausführungsbeispiel eines erfindungsgemäßen Ultraschalldurchflussmessgeräts 3 mit zwei erfindungsgemäßen Ultraschallwandlern 1. Beide Ultraschallwandler 1 sind sowohl als Ultraschallsender als auch als Ultraschallempfänger ausgebildet. Die Ultraschallwandler 1 sind derart versetzt an dem Messrohr 12 angeordnet, dass ein Ultraschallsignal jeweils in und entgegen der Strömungsrichtung in das Medium ausgesendet wird. Aufgrund der erfindungsgemäßen Ausgestaltung der Ultraschallwandler kann jeder Ultraschallwandler in Abhängigkeit der Messsituation und der Eigenschaften des zu vermessenden Mediums unterschiedlich angesteuert werden. Im Ergebnis können die Ultraschallwandler 1 Signale mit zwei unterschiedlichen Strahlbreiten ΔΘ₁ und ΔΘ₂ sowie auch mit zwei unterschiedlichen Frequenzen f₁ und f₂ aussenden.

Insofern kann der Betrieb des Ultraschalldurchflussmessgeräts 3 besonders flexibel an das Medium und die aktuelle Messsituation angepasst werden.

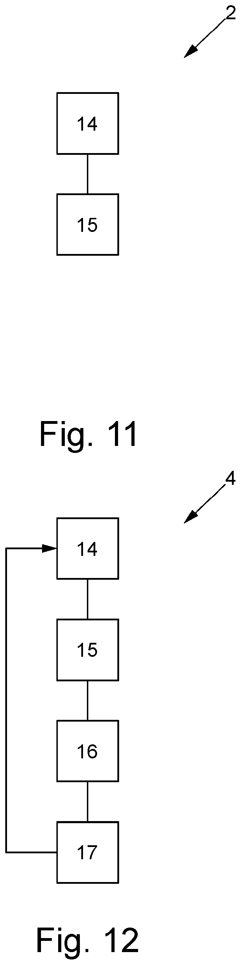

Fig. 11 zeigt ein erstes Ausführungsbeispiel eines Verfahrens 2 zum Betreiben eines erfindungsgemäßen Ultraschallwandlers 1.

In einem ersten Schritt wird die Viskosität des zu messenden Mediums bestimmt 14. In Abhängigkeit von der Viskosität wird eine Spannung an eine elektroakustische Scheibe 10 angelegt. Durch die festgelegte Spannung wird die Frequenz des erzeugten Ultraschallsignals derart eingestellt, dass sie 1 MHz oder 2 MHz beträgt.

Alternativ zur Bestimmung der Viskosität des Mediums kann auch die Intensität der Transmission eines Ultraschallsignals bestimmt werden, und/oder das Frequenzspektrum des Transmissionssignals kann bestimmt werden. Insofern kann auch alternativ die Frequenz des Ultraschallsignals derart eingestellt werden, dass die Transmission durch das Medium maximal ist.

Fig. 12 zeigt ein Ausführungsbeispiel eines Verfahrens 4 zum Betreiben eines Ultraschalldurchflussmessgeräts 3, wobei das Ultraschalldurchflussmessgerät 3 wie in Fig. 10 dargestellt, ausgebildet ist. In einem ersten Schritt 14 wird die Viskosität des Mediums bestimmt. In Abhängigkeit von dem gemessenen Wert der Viskosität wird bei jedem Ultraschallwandler 1 eine Spannung an eine elektroakustische Scheibe 10 angelegt 15, wodurch die Frequenz des Ultraschallsignals eingestellt wird. Aus den gemessenen Laufzeiten der Ultraschallsignale wird die Strömungsgeschwindigkeit des Mediums bestimmt 16.

In Abhängigkeit von der gemessenen Strömungsgeschwindigkeit wird die Ansteuerung der Elektroden 9 umgeschaltet 17, sodass die Strahlbreite vergrößert bzw. verkleinert wird. Im Detail wird entweder die Ansteuerung umgeschaltet, wenn der Wert der Strömungsgeschwindigkeit einen Grenzwert überschreitet oder unterschreitet, alternativ oder ergänzend wird die Ansteuerung umgeschaltet, wenn die transmittierte Intensität einen Schwellwert überschreitet oder unterschreitet.

Anschließend wird die Viskosität erneut bestimmt 14, bevor ein zweites Ultraschallsignal zur Bestimmung der Strömungsgeschwindigkeit ausgesendet wird.

Die Bestimmung der Viskosität des zu messenden Mediums kann vor jeder Messung erfolgen, in einem alternativen Ausführungsbeispiel erfolgt die Messung in regelmäßigen oder unregelmäßigen Abständen. Weiterhin können die Ultraschallwandler mit der gleichen Frequenz betrieben werden, alternativ können die Ultraschallsignale auch mit unterschiedlichen Frequenzen betrieben werden. In diesem Fall arbeiten die einzelnen Ultraschallwandler in Sendebetrieb mit anderen Frequenzen als im Empfangsbetrieb.

Im Ergebnis weist das dargestellte Verfahren den Vorteil auf, dass der Betrieb der Ultraschallwandler 1 und insofern der Betrieb des Ultraschalldurchflussmessgeräts 3 auf das Medium und/oder auf die aktuelle Messsituation angepasst werden kann, sodass insgesamt der Messprozess verbessert werden kann.

### Bezugszeichen

- 1: Ultraschallwandler
- 2: Verfahren zum Betreiben eines Ultraschallwandlers
- 3: Ultraschalldurchflussmessgerät
- 4: Verfahren zum Betreiben eines Ultraschalldurchflussmessgeräts
- 5: Gehäuse
- 6: akustisches Fenster
- 7: elektroakustisches Element
- 8: Stirnfläche
- 9: Elektrode
- 10: elektroakustische Scheibe
- 11: elektrische Last
- 12: Messrohr
- 13: Steuereinheit
- 14: Bestimmung der Viskosität
- 15: Anlegen einer Spannung an eine elektroakustische Scheibe
- 16: Bestimmung der Strömungsgeschwindigkeit
- 17: Umschaltung der Ansteuerung der Elektroden

## Patentansprüche

1. Ultraschallwandler (1) für ein Ultraschalldurchflussmessgerät (3), wobei der Ultraschallwandler (1) wenigstens ein elektroakustisches Element (7), wenigstens ein Gehäuse (5), wenigstens ein akustisches Fenster (6) und wenigstens eine Steuereinheit (13) aufweist,
wobei das elektroakustische Element (7) innerhalb des Gehäuses (5) derart auf dem akustischen Fenster (6) angeordnet ist, dass im Betrieb ein von dem elektroakustischen Element (7) erzeugtes Ultraschallsignal das Gehäuse (5) durch das akustische Fenster (6) verlässt,
wobei
das elektroakustische Element (7) wenigstens zwei elektroakustische Scheiben (10) aufweist, wobei die wenigstens zwei elektroakustischen Scheiben (10) übereinander angeordnet sind und wobei wenigstens eine elektroakustische Scheibe (10) von der Steuereinheit (13) zumindest zeitweise separat angeregt werden kann,
**dadurch gekennzeichnet,**
**dass** der Ultraschallwandler nach einem Verfahren gemäß Anspruch 10 betrieben wird.

2. Ultraschallwandler (1) nach Anspruch 1, dass das elektroakustische Element (7) ein Piezoelement ist und/oder ein mikromechanisches Element eines kapazitiv mikromechanischen Ultraschallwandlers ist und/oder dass wenigstens eine elektroakustische Scheibe (10) eine Piezoscheibe und/oder eine mikromechanische Scheibe eines kapazitiv mikromechanischen Ultraschallwandlers ist.

3. Ultraschallwandler (1) nach Anspruch 1 oder 2, **dadurch gekennzeichnet, dass** die wenigstens zwei elektroakustischen Scheiben (10) jeweils eine erste und eine zweite Stirnfläche (8) aufweisen, dass mit dem elektroakustischen Element (7) wenigstens drei Elektroden (9) verbunden sind, wobei wenigstens eine Elektrode (9) auf der dem akustischen Fenster (6) zugewandten Stirnfläche (8) der ersten elektroakustischen Scheiben (10) angeordnet ist, wobei wenigstens eine Elektrode (9) zwischen der ersten und der zweiten elektroakustischen Scheibe (10) angeordnet ist, und wobei wenigstens eine Elektrode (9) auf der dem akustischen Fenster (6) abgewandten Stirnfläche (8) der zweiten elektroakustischen Scheibe (10) angeordnet ist.

4. Ultraschallwandler nach einem der Ansprüche 1 bis 3, **dadurch gekennzeichnet, dass** sich wenigstens zwei Elektroden in ihrer Form und/oder in ihrer Größe unterscheiden, wobei sich vorzugsweise zwei auf derselben Stirnfläche angeordneten Elektroden in ihrer Form und/oder in ihrer Größe unterscheiden.

5. Ultraschallwandler nach einem der Ansprüche 1 bis 4, **dadurch gekennzeichnet, dass** die Steuereinheit derart ausgebildet und mit den Elektroden verbunden ist, dass wenigstens zwei Elektroden zumindest zeitweise mit einer unterschiedlichen Phase und/oder mit einer unterschiedlichen Amplitude ansteuerbar sind.

6. Ultraschallwandler nach einem der Ansprüche 1 bis 5, **dadurch gekennzeichnet, dass** eine Mehrzahl an separat ansteuerbaren Elektroden vorhanden ist, wobei die Mehrzahl an Elektroden auf derselben Stirnfläche von wenigstens einer elektroakustischen Scheibe angeordnet ist, und wobei im Betrieb die einzelnen Elektroden zur Einstellung der Strahlform, insbesondere der Strahlbreite, des erzeugten Ultraschallsignals in unterschiedlichen Kombinationen ansteuerbar sind.

7. Ultraschallwandler (1) nach einem der Ansprüche 1 bis 6, **dadurch gekennzeichnet, dass** wenigstens zwei elektroakustische Scheiben (10) im Wesentlichen die gleiche Dicke oder eine unterschiedliche Dicke aufweisen.

8. Ultraschallwandler (1) nach einem der Ansprüche 1 bis 7, **dadurch gekennzeichnet, dass** wenigstens zwei elektroakustische Scheiben (10) das gleiche Material oder ein unterschiedliches Material aufweisen.

9. Ultraschallwandler (1) nach einem der Ansprüche 1 bis 8, **dadurch gekennzeichnet, dass** wenigstens eine elektroakustische Scheibe (10) mit einer einstellbaren Last, insbesondere einer induktiven und/oder kapazitiven Last, verbunden ist.

10. Verfahren (2) zum Betreiben eines Ultraschallwandlers (1) in einer Messumgebung,
wobei der Ultraschallwandler (1) wenigstens ein elektroakustisches Element (7), wenigstens ein Gehäuse (5), wenigstens ein akustisches Fenster (6) und wenigstens eine Steuereinheit (13) aufweist,
wobei das elektroakustische Element (7) innerhalb des Gehäuses (5) derart auf dem akustischen Fenster (6) angeordnet ist, dass im Betrieb ein von dem elektroakustischen Element (7) erzeugtes Ultraschallsignal das Gehäuse (5) durch das akustische Fenster (6) verlässt, wobei der Ultraschallwandler das Ultraschallsignal (1) in ein Medium aussendet,
und wobei
das elektroakustische Element (7) wenigstens zwei elektroakustische Scheiben (10) aufweist, wobei die wenigstens zwei elektroakustischen Scheiben (10) übereinander angeordnet sind und wobei wenigstens eine elektroakustische Scheibe (10) von der Steuereinheit (13) zumindest zeitweise separat angeregt werden kann,
**dadurch gekennzeichnet,**
**dass** in Abhängigkeit von der Viskosität des Mediums und/oder der Absorption des erzeugten Ultraschallsignals durch das Medium das elektroakustische Element (7), insbesondere wenigstens eine elektroakustische Scheibe (10), angesteuert wird,
wobei die elektroakustischen Scheiben derart angesteuert werden, dass das Ultraschallsignal eine erste Frequenz aufweist, wenn der Wert der Viskosität des Mediums unterhalb von einem Grenzwert liegt und wobei die elektroakustischen Scheiben derart angesteuert werden, dass das Ultraschallsignal eine zweite Frequenz aufweist, wenn der Wert der Viskosität oberhalb von einem Grenzwert liegt und/oder
wobei die Transmission des Ultraschallsignals durch das Medium bei wenigstens zwei zu realisierenden Frequenzen bestimmt wird, wobei das elektroakustische Element dann derart angesteuert wird, dass ein Ultraschallsignal mit einer Frequenz ausgesendet wird, deren Absorption minimal ist.

11. Ultraschalldurchflussmessgerät (3) mit wenigstens einem Messrohr (12), mit wenigstens einem Ultraschallwandler (1) und mit wenigstens einer Steuer- und Auswerteeinheit, wobei der wenigstens eine Ultraschallwandler (1) zumindest als Ultraschallsender, vorzugsweise als Ultraschallsender und -empfänger, ausgebildet ist und wobei der Ultraschallwandler (1) derart an dem Messrohr (12) angeordnet ist, dass er im Betrieb ein Ultraschallsignal in oder entgegen der Strömungsrichtung eines strömenden Mediums in das Messrohr (12) aussendet,
**dadurch gekennzeichnet,**
**dass** der wenigstens eine Ultraschallwandler (1) gemäß einem der Ansprüche 1 bis 9 ausgebildet ist und dass das Ultraschalldurchflussmessgerät für den Fall, dass das elektroakustische Element (7) in Abhängigkeit von der Viskosität des Mediums angesteuert wird, eine weitere Sensoreinheit zur Erfassung der Viskosität des Mediums aufweist.

12. Ultraschalldurchflussmessgerät (3) nach Anspruch 11, **dadurch gekennzeichnet, dass** in der Steuer- und Auswerteeinheit ein Zusammenhang zwischen der Viskosität des zu messenden Mediums und/oder der Absorption des Ultraschallsignals durch das Medium und der Ansteuerung des elektroakustischen Elementes (7) hinterlegt ist.

13. Ultraschalldurchflussmessgerät (3) nach Anspruch 11 oder 12, **dadurch gekennzeichnet, dass** in der Steuer- und Auswerteeinheit ein Zusammenhang zwischen dem Wert wenigstens einer Zustandsgröße des Ultraschalldurchflussmessgeräts, insbesondere einem Wert der Fließgeschwindigkeit und/oder der Viskosität des zu messenden Mediums, und der Ansteuerung der Elektroden (9) hinterlegt ist.

14. Verfahren (4) zum Betreiben eines Ultraschalldurchflussmessgeräts (3),
**dadurch gekennzeichnet,**
**dass** das Ultraschalldurchflussmessgerät (3) gemäß einem der Ansprüche 11 bis 13 ausgebildet ist wobei für den Fall, dass das elektroakustische Element (7) in Abhängigkeit von der Viskosität des Mediums angesteuert wird, in einem ersten Schritt die Viskosität des Mediums bestimmt wird.

15. Verfahren (4) nach Anspruch 14, **dadurch gekennzeichnet, dass** das Ultraschalldurchflussmessgerät (3) wenigstens zwei Ultraschallwandler (1) aufweist, wobei die wenigstens zwei Ultraschallwandler (1) als Ultraschallsender und als Ultraschallempfänger ausgebildet sind und wobei beide Ultraschallwandler (1) gemäß einem der Ansprüche 1 bis 9 ausgebildet sind, wobei beide Ultraschallwandler (1) im Hinblick auf die Ausgestaltung des elektroakustischen Elementes (7) gleich ausgebildet sind und wobei die beiden Ultraschallwandler (1) im Betrieb gleich angesteuert werden.

16. Verfahren (4) nach Anspruch 14 oder 15, **dadurch gekennzeichnet**, dassdie Steuer- und Auswerteeinheit in Abhängigkeit von wenigstens einer Zustandsgröße wenigstens zwei Elektroden (9) ansteuert, und wobei im Betrieb in Abhängigkeit von der wenigstens einer Zustandsgröße die Ansteuerung der wenigstens zwei Elektroden geändert wird.

## Claims

1. Ultrasonic transducer (1), for an ultrasonic flowmeter (3), wherein the ultrasonic transducer (1) comprises at least one electro-acoustic element (7), at least one housing (5), at least one acoustic window (6) and at least one control unit (13),
wherein the electro-acoustic element (7) is arranged within the housing (5) on the acoustic window (6) such that, during operation, an ultrasonic signal generated by the electro-acoustic element (7) leaves the housing (5) through the acoustic window (6),
wherein the electro-acoustic element (7) has at least two electro-acoustic discs (10), wherein the at least two electro-acoustic discs (10) are arranged one above the other, and wherein at least one electro-acoustic disc (10) can be excited separately, at least temporarily, by the control unit (13)
**characterized in**
**that** the ultrasonic transducer is operated using the method according to claim 10.

2. Ultrasonic transducer (1) according to claim 1, **characterized in that** the electro-acoustic element (7) is a piezo element and/or is a micro-mechanical element of a capacitive micro-mechanical ultrasonic transducer and/or that at least one electro-acoustic disc (10) is a piezo disc and/or a micro-mechanical disc of a capacitive micro-mechanical ultrasonic transducer.

3. Ultrasonic transducer (1) according to claim 1 or 2, **characterized in that** the at least two electro-acoustic discs (10) each have a first and a second end face (8), that at least three electrodes (9) are connected to the electro-acoustic element (7), wherein at least one electrode (9) is arranged on the end face (8) of the first electro-acoustic discs (10) facing the acoustic window (6), wherein at least one electrode (9) is arranged between the first and the second electro-acoustic disc (10), and wherein at least one electrode (9) is arranged on the end face (8) of the second electro-acoustic disc (10) facing away from the acoustic window (6).

4. Ultrasonic transducer according to any one of claims 1 to 3, **characterized in that** at least two electrodes differ in their shape and/or in their size, wherein preferably two electrodes arranged on the same end face differ in their shape and/or in their size.

5. Ultrasonic transducer according to any one of claims 1 to 4, **characterized in that** the control unit is designed and connected to the electrodes in such a way that at least two electrodes can be controlled at least temporarily with a different phase and/or with a different amplitude.

6. Ultrasonic transducer according to any one of claims 1 to 5, **characterized in that** a plurality of separately controllable electrodes is present, wherein the plurality of electrodes is arranged on the same end face of at least one electro-acoustic disc, and wherein the individual electrodes are controllable in different combinations during operation in order to set the beam shape, in particular the beam width, of the generated ultrasonic signal.

7. Ultrasonic transducer (1) according to any one of claims 1 to 6, **characterized in that** at least two electro-acoustic discs (10) have substantially the same thickness or a different thickness.

8. Ultrasonic transducer (1) according to any one of claims 1 to 7, **characterized in that** at least two electro-acoustic discs (10) have the same material or a different material.

9. Ultrasonic transducer (1) according to any one of claims 1 to 8, **characterized in that** at least one electro-acoustic disc (10) is connected to an adjustable load, in particular an inductive and/or capacitive load.

10. Method (2) for operating an ultrasonic transducer (1) in a measurement environment,
wherein the ultrasonic transducer (1) comprises at least one electro-acoustic element (7), at least one housing (5), at least one acoustic window (6) and at least one control unit (13),
wherein the electro-acoustic element (7) is arranged within the housing (5) on the acoustic window (6) such that, during operation, an ultrasonic signal generated by the electro-acoustic element (7) leaves the housing (5) through the acoustic window (6), wherein the ultrasonic transducer (1) emits an ultrasonic signal into a medium and
wherein the electro-acoustic element (7) has at least two electro-acoustic discs (10), wherein the at least two electro-acoustic discs (10) are arranged one above the other, and wherein at least one electro-acoustic disc (10) can be excited separately, at least temporarily, by the control unit (13)
**characterized in**
**that** the electro-acoustic element (7), in particular at least one electro-acoustic disc (10), is actuated in dependence on the viscosity of the medium and/or the absorption of the generated ultrasonic signal by the medium,
wherein the electro-acoustic discs are controlled in such a way that the ultrasonic signal has a first frequency when the value of the viscosity of the medium is below a limit value and wherein the electro-acoustic discs are controlled in such a way that the ultrasonic signal has a second frequency when the value of the viscosity is above a limit value and/or
wherein the transmission of the ultrasonic signal through the medium is determined at the at least two frequencies to be implemented, wherein the electro-acoustic element is then controlled in such a way that an ultrasonic signal is emitted at a frequency whose absorption is minimal.

11. Ultrasonic flowmeter (3) having at least one measuring tube (12), having at least one ultrasonic transducer (1) and having at least one control and evaluation unit, wherein the at least one ultrasonic transducer (1) is designed at least as an ultrasonic transmitter, preferably as an ultrasonic transmitter and receiver, and wherein the ultrasonic transducer (1) is arranged on the measuring tube (12) in such a way that, during operation, it emits an ultrasonic signal in the direction or opposite the direction of flow of a flowing medium into the measuring tube (12),
**characterized in**
**that** the at least one ultrasonic transducer (1) is designed according to any one of the claims 1 to 9 and in that the ultrasonic flowmeter has a further sensor unit for capturing the viscosity of the medium in the event that the electro-acoustic element (7) is actuated as a function of the viscosity of the medium.

12. Ultrasonic flowmeter (3) according to claim 11, **characterized in that** a relationship between the viscosity of the medium to be measured and/or the absorption of the ultrasonic signal by the medium and the control of the electro-acoustic element (7) is stored in the control and evaluation unit.

13. Ultrasonic flowmeter (3) according to claim 11 or 12, **characterized in that** a correlation between the value of at least one state variable of the ultrasonic flowmeter, in particular a value of the flow velocity and/or the viscosity of the medium to be measured, and the control of the electrodes (9) is stored in the control and evaluation unit.

14. Method (4) for operating an ultrasonic flowmeter (3),
**characterized in**
**that** the ultrasonic flowmeter (3) is designed according to one of claims 11 to 13, wherein, in the event that the electro-acoustic element (7) is controlled as a function of the viscosity of the medium, the viscosity of the medium is determined in a first step.

15. Method (4) according to claim 14, **characterized in that** the ultrasonic flowmeter (3) has at least two ultrasonic transducers (1), wherein the at least two ultrasonic transducers (1) are designed as an ultrasonic transmitter and as an ultrasonic receiver, and wherein both ultrasonic transducers (1) are designed according to any one of claims 1 to 9, wherein both ultrasonic transducers (1) are designed identically with regard to the design of the electro-acoustic element (7), and wherein the two ultrasonic transducers (1) are controlled identically during operation.

16. Method (4) according to claim 14 or 15, **characterized in that** the control and evaluation unit controls at least two electrodes (9) in dependence on at least one state variable, and wherein, during operation, the control of the at least two electrodes is changed in dependence on the at least one state variable.

## Revendications

1. Transducteur à ultrasons (1) destiné à un débitmètre à ultrasons (3), le transducteur à ultrasons (1) comportant au moins un élément électroacoustique (7), au moins un boîtier (5), au moins une fenêtre acoustique (6) et au moins une unité de commande (13), l'élément électroacoustique (7) étant disposé sur la fenêtre acoustique (6) à l'intérieur du boîtier (5) de manière à ce que, pendant le fonctionnement, un signal ultrasonore généré par l'élément électroacoustique (7) quitte le boîtier (5) par la fenêtre acoustique (6), l'élément électroacoustique (7) comportant au moins deux disques électroacoustiques (10), les au moins deux disques électroacoustiques (10) étant disposés l'un au-dessus de l'autre et au moins un disque électroacoustique (10) pouvant être excité séparément, et au moins temporairement, par l'unité de commande (13),
**caractérisé en ce que**
le transducteur à ultrasons fonctionne conformément à un procédé selon la revendication 10.

2. Transducteur à ultrasons (1) selon la revendication 1, **caractérisé en ce que** l'élément électroacoustique (7) est un élément piézoélectrique et/ou un élément micromécanique d'un transducteur à ultrasons micromécanique capacitif et/ou **en ce qu'**au moins un disque électroacoustique (10) est un disque piézoélectrique et/ou un disque micromécanique d'un transducteur à ultrasons micromécanique capacitif.

3. Transducteur à ultrasons (1) selon la revendication 1 ou 2, **caractérisé en ce que** les au moins deux disques électroacoustiques (10) comportent chacun une première et une deuxième face frontale (8), **en ce qu'**au moins trois électrodes (9) sont reliées à l'élément électroacoustique (7), au moins une électrode (9) étant disposée sur la face frontale (8) des premiers disques électroacoustiques (10) qui est dirigée vers la fenêtre acoustique (6), au moins une électrode (9) étant disposée entre le premier et le deuxième disque électroacoustique (10), et au moins une électrode (9) étant disposée sur la face frontale (8) du deuxième disque électroacoustique (10) qui est à l'opposé de la fenêtre acoustique (6).

4. Transducteur à ultrasons selon l'une des revendications 1 à 3, **caractérisé en ce qu'**au moins deux électrodes diffèrent par leur forme et/ou par leur taille, de préférence deux électrodes disposées sur la même face frontale différant par leur forme et/ou leur taille.

5. Transducteur à ultrasons selon l'une des revendications 1 à 4, **caractérisé en ce que** l'unité de commande est conçue et reliée aux électrodes de manière à ce qu'au moins deux électrodes puissent être commandées au moins temporairement avec une phase différente et/ou avec une amplitude différente.

6. Transducteur à ultrasons selon l'une des revendications 1 à 5, **caractérisé en ce qu'**une pluralité d'électrodes commandables séparément sont présentes, la pluralité d'électrodes étant disposée sur la même face frontale d'au moins un disque électroacoustique et, pendant le fonctionnement, les électrodes individuelles pouvant être commandées selon différentes combinaisons pour ajuster la forme du faisceau, en particulier la largeur du faisceau, du signal ultrasonore généré.

7. Transducteur à ultrasons (1) selon l'une des revendications 1 à 6, **caractérisé en ce qu'**au moins deux disques électroacoustiques (10) ont sensiblement la même épaisseur ou une épaisseur différente.

8. Transducteur à ultrasons (1) selon l'une des revendications 1 à 7, **caractérisé en ce qu'**au moins deux disques électroacoustiques (10) sont du même matériau ou un matériau différent.

9. Transducteur à ultrasons (1) selon l'une des revendications 1 à 8, **caractérisé en ce qu'**au moins un disque électroacoustique (10) est relié à une charge réglable, notamment une charge inductive et/ou capacitive.

10. Procédé (2) de fonctionnement d'un transducteur à ultrasons (1) dans un environnement de mesure, le transducteur à ultrasons (1) comportant au moins un élément électroacoustique (7), au moins un boîtier (5), au moins une fenêtre acoustique (6) et au moins une unité de commande (13), l'élément électroacoustique (7) étant disposé sur la fenêtre acoustique (6) à l'intérieur du boîtier (5) de manière à ce que, pendant le fonctionnement, un signal ultrasonore généré par l'élément électroacoustique (7) quitte le boîtier (5) par la fenêtre acoustique (6), le transducteur à ultrasons émettant le signal ultrasonore (1) dans un milieu, et l'élément électroacoustique (7) comportant au moins deux disques électroacoustiques (10), les au moins deux disques électroacoustiques (10) étant disposés l'un au-dessus de l'autre et au moins un disque électroacoustique (10) pouvant être excité séparément, et au moins temporairement, par l'unité de commande (13),
**caractérisé en ce que**
l'élément électroacoustique (7), en particulier au moins un disque électroacoustique (10), est commandé en fonction de la viscosité du milieu et/ou de l'absorption, par le milieu, du signal ultrasonore généré,
les disques électroacoustiques étant commandés de manière à ce que le signal ultrasonore ait une première fréquence lorsque la valeur de la viscosité du milieu est inférieure à une valeur limite et les disques électroacoustiques étant commandés de manière à ce que le signal ultrasonore ait une deuxième fréquence lorsque la valeur de la viscosité est supérieure à une valeur limite et/ou
la transmission du signal ultrasonore à travers le milieu étant déterminée pour au moins deux fréquences à réaliser, l'élément électroacoustique étant ensuite commandé de manière à ce qu'un signal ultrasonore soit émis à une fréquence dont l'absorption est minimale.

11. Débitmètre à ultrasons (3) comprenant au moins un tube de mesure (12), au moins un transducteur à ultrasons (1) et au moins une unité de commande et d'évaluation, l'au moins un transducteur à ultrasons (1) étant conçu au moins comme un émetteur à ultrasons, de préférence comme un émetteur-récepteur à ultrasons, et le transducteur à ultrasons (1) étant disposé sur le tube de mesure (12) de manière à ce que, pendant le fonctionnement, il émette un signal ultrasonore dans le sens d'écoulement, ou dans le sens opposé, d'un fluide s'écoulant dans le tube de mesure (12),
**caractérisé en ce que**
l'au moins un transducteur à ultrasons (1) est conçu selon l'une des revendications 1 à 9 et le débitmètre à ultrasons comporte une autre unité formant capteur destinée à détecter la viscosité du milieu dans le cas où l'élément électroacoustique (7) est commandé en fonction de la viscosité du milieu.

12. Débitmètre à ultrasons (3) selon la revendication 11, **caractérisé en ce qu'**une relation entre la viscosité du milieu à mesurer et/ou l'absorption du signal ultrasonore par le milieu et la commande de l'élément électroacoustique (7) est stockée dans l'unité de commande et d'évaluation.

13. Débitmètre à ultrasons (3) selon la revendication 11 ou 12, **caractérisé en ce qu'**une relation entre la valeur d'au moins une variable d'état du débitmètre à ultrasons, en particulier une valeur de vitesse d'écoulement et/ou de viscosité du milieu à mesurer, et la commande des électrodes (9) est stockée dans l'unité de commande et d'évaluation.

14. Procédé (4) de fonctionnement d'un débitmètre à ultrasons (3),
**caractérisé en ce que**
le débitmètre à ultrasons (3) est conçu selon l'une des revendications 11 à 13, la viscosité du milieu étant déterminée dans une première étape dans le cas où l'élément électroacoustique (7) est commandé en fonction de la viscosité du milieu.

15. Procédé (4) selon la revendication 14, **caractérisé en ce que** le débitmètre à ultrasons (3) comporte au moins deux transducteurs à ultrasons (1), les au moins deux transducteurs à ultrasons (1) étant conçus comme des émetteurs à ultrasons et comme des récepteurs à ultrasons et les deux transducteurs à ultrasons (1) étant conçus selon l'une des revendications 1 à 9, les deux transducteurs à ultrasons (1) étant conçus de la même manière en termes de conception de l'élément électroacoustique (7) et les deux transducteurs à ultrasons (1) étant commandés de la même manière pendant le fonctionnement.

16. Procédé (4) selon la revendication 14 ou 15, **caractérisé en ce que** l'unité de commande et d'évaluation commande au moins deux électrodes (9) en fonction d'au moins une grandeur d'état et, pendant le fonctionnement, la commande des au moins deux électrodes est modifiée en fonction de l'au moins une grandeur d'état.
